# EUROPÄISCHE PATENTSCHRIFT

(11) **EP 2 611 307 B1**
(45) Veröffentlichungstag und Bekanntmachung des Hinweises auf die Patenterteilung: **13.07.2016**
(21) Anmeldenummer: 12720188.7
(22) Anmeldetag: 11.05.2012
(51) Int. Cl.: A23G 3/34, B08B 1/00, B08B 3/08, B29C 39/42, A23G 1/00, A23G 1/21, A23G 3/02

(54) **VORRICHTUNG UND VERFAHREN ZUR HERSTELLUNG EINES GEFORMTEN VERZEHRGUTS**
DEVICE AND METHOD FOR PRODUCING A SHAPED CONSUMABLE ITEM
DISPOSITIF ET PROCÉDÉ UTILISÉS POUR PRODUIRE UN PRODUIT COMESTIBLE MOULÉ

(30) Priorität: 11.05.2011 EP 11165692
(43) Veröffentlichungstag der Anmeldung: 10.07.2013
(73) Patentinhaber: Bühler AG, 9240 Uzwil (CH)
(72) Erfinder: HUPERZ, Frank, 51702 Bergneustadt (DE); MARCINKOWSKI, David, 51545 Waldbröl (DE); PACK, Tanja, 51580 Reichshof-Allinghausen (DE); PAUL, Michael, 51702 Bergneustadt (DE)
(74) Vertreter: Hepp Wenger Ryffel AG
(86) Internationale Anmeldenummer: PCT/EP2012/058720
(87) Internationale Veröffentlichungsnummer: WO 2012/152904

(56) Entgegenhaltungen:
- WO-A1-98/52425
- WO-A1-2007/079599
- DE-A1-102005 009 410
- DE-A1-102005 015 052
- DE-A1-102005 018 417
- DE-A1-102006 060 961

## Beschreibung

Die Erfindung bezieht sich auf eine Vorrichtung und ein Verfahren zur Herstellung eines geformten Verzehrguts aus einer Fettmasse, insbesondere einer kakaohaltigen bzw. schokoladeartigen Fettmasse.

Bei einem derartigen Verfahren werden zunächst eine Vielzahl Giessformen mit der Fettmasse im fliessfähigen temperierten Zustand gefüllt, woraufhin in die gefüllten Giessformen abgekühlte Stempel geführt werden, welche die Fettmasse formen und zumindest teileise erstarren lassen, insbesondere zu einer Hülse. Anschliessend werden die Stempel von der Masse weggeführt, wonach die geformte und erstarrte Fettmasse ggf. nach weiteren Bearbeitungsschritten aus den Giessformen entfernt wird. Diese Schritte können an den entleerten Giessformen erneut durchgeführt werden.

Die hierfür verwendeten Kaltstempelanlagen umfassen eine Vielzahl von kühlbaren Stempeln, wie sie etwa aus EP0981280 bekannt sind. Die Stempel sind bevorzugt aus wärmeleitfähigem Material hergestellt und der Taupunkt der das Verzehrgut umgebenden Atmosphäre wird unter der Temperatur der Stempel gehalten, damit sich an den Stempeln kein Kondensat bildet. Dies wird in der Regel dadurch erreicht, dass der Umgebung trockene Luft, auch getrocknete Luft oder Trockenluft genannt, zugeführt wird.

In der Regel verbleibt die erstarrte Fettmasse vollständig und damit zufriedenstellend in den Formen, doch kann es mitunter vorkommen, dass Reste der erstarrten Fettmasse an den Stempeln zurückbleiben. Diese lösen sich zumeist in einem folgenden Formprozess wieder. Geschieht dies nicht, so kann es zu einer Beeinträchtigung der Formbildung beim erneuten Formen der Fettmasse kommen. Um das zu verhindern, werden die Stempel einer derartigen Anlage einer Reinigung unterzogen, sobald festgestellt wird, dass die erstarrte Fettmasse nicht die gewünschte Form hat.

Die an den Stempeln verbliebenen Reste werden mit einem Werkzeug z.B. Spachtel entfernt. Damit der reibungslose Ablauf gewahrt bleibt, erfolgt das Reinigen in der Regel während des Betriebes und muss sehr schnell gehen.

Der Bediener öffnet dazu in der Regel das Gehäuse der Kaltstempelanlage, wobei feuchte Luft in die Stempelumgebung gelangt und es zu einer unerwünschten Kondensation kommen kann.

Sofern die Größe der Anlage es erlaubt, kann sich der Bediener in das Gehäuse begeben und das Gehäuse wieder hinter sich schliessen. Dazu muss allerdings den notwendigen sicherheitstechnischen und hygienischen Anforderungen genügt werden, was in vielen Fällen schwierig bis unmöglich ist.

Bei kleineren Anlagen ist es ohnehin unmöglich, diese zu betreten.

Die DE 102005 009 410 offenbart eine Kaltstempelanlage, wobei die Stempel innerhalb einer Stempelkammer mit einem Trockner für ein gasförmiges Medium angeordnet sind. Wenn die Tür der Stempelkammer zu Inspektions- oder Wartungszwecken geöffnet wird, so strömt eine erhöhte Menge getrockneter Luft aus, sodass der Druck auch bei geöffneter Tür erhalten bleibt.

Die Anlage benötigt eine Regelungseinrichtung zum Feststellen des Trockenluftbedarfs und eine grosse Menge Trockenluft, wenn die Tür länger geöffnet bleibt. Die Anlage ist somit kompliziert und energieaufwendig.

Um eine Kondensatbildung zu verhindern sowie um Kondensat abzulösen, können die Stempel mit einem Alkohol eingesprüht werden. Dieser bildet allerdings selbst eine unerwünschte Zwischenschicht zwischen Stempel und Fettmasse.

Die gleiche Problematik besteht auch beim Austausch der Stempel. Wird eine neue Stempelplatte montiert, so wird dazu in der Regel das Gehäuse geöffnet. Dabei wird die Stempelumgebung mit Raumluft durchsetzt, wodurch es an den gekühlten Stempel leicht zu einer Kondensatbildung kommen kann.

Die EP 1 555 886 beschreibt eine Vorrichtung, bei der gänzlich auf ein Gehäuse verzichtet wird. Um die Bildung von Kondenswasser an den Stempeln zu verhindern, werden die Stempel mit getrockneter Luft angeblasen, sobald die Stempel von den Formen gelöst vorliegen. Da bei dieser Vorrichtung die Produktion ohne Schutz vor der Umgebungsluft stattfindet, bestehen Risiken in Bezug auf die Hygiene. Ausserdem wird auch beim Betrieb dieser Einrichtung sehr viel Trockenluft benötigt, was sehr viel Energie verbraucht und daher ungünstig ist.

Aus WO 98/52425 ist eine Vorrichtung bekannt, bei welcher Stempel und Form gemeinsam während des Temperier- und Fliesspressvorganges bewegt werden. Bevor die Form aus dem Gehäuse auslaufen kann, wird der Stempel angehoben und die Form freigegeben, sodass der Stempel im Gehäuse verbleibt.

DE 102005009410 zeigt eine Vorrichtung, bei welcher ein in einer Stempelkammer angeordneter Kaltstempel und Giessformen aufeinander zu bewegt werden.

Der Erfindung liegt die Aufgabe zugrunde, die Nachteile des Bekannten zu vermeiden und bei der eingangs beschriebenen Vorrichtung den Aufwand zur Reinigung sowie zum Auswechseln von Stempelplatten zu reduzieren und die Bedienung komfortabler zu gestalten.

Die erfindungsgemässe Vorrichtung zum Herstellen von geformten Verzehrgütern aus einer Fettmasse, insbesondere einer kakaohaltigen bzw. schokoladeartigen Fettmasse umfasst ein Gehäuse und wenigstens eine Stempelplatte. Die Stempelplatte verfügt über mindestens einen temperierbaren Stempel.

Die Stempelplatte ist erfindungsgemäss aus einer Arbeitsposition, in welcher der mindestens eine temperierbare Stempel in wenigstens eine Giessform eingeführt werden kann, bewegbar, insbesondere schiebbar, wobei die Stempelplatte aus dem Gehäuse hinaus bewegbar, insbesondere verschiebbar ist.

Durch das Herausbewegen der wenigstens einen Stempelplatte lässt sich der mindestens eine Stempel reinigen, ohne dass eine Person in das Gehäuse eintreten oder hineingreifen muss. Dies verringert den Arbeitsaufwand für die Reinigung und erhöht die Hygiene. Zudem wird auch der Arbeitsaufwand zum Auswechseln der wenigstens einen Stempelplatte erheblich reduziert.

Da die Stempelplatte schnell aus dem Gehäuse herausgeführt und in das Gehäuse hereingeführt werden kann, ist zudem der Verlust an Trockenluft während des Reinigens bez. des Auswechselns nur sehr gering.

Das Gehäuse umschliesst die Stempelplatte bevorzugt vollständig. Dies erlaubt den Betrieb der Stempelplatte in einer kontrollierten Atmosphäre. Insbesondere können die Temperatur sowie der Feuchtigkeitsgehalt der Luft innerhalb des Gehäuses innerhalb bestimmter und definierter Werte gehalten werden. Ausserdem kann die Luft zur Einhaltung von Hygienevorschriften vor dem Einleiten in das Gehäuse gefiltert und/oder entkeimt werden.

Die Vorrichtung umfasst bevorzugterweise weitere Komponenten innerhalb des Gehäuses, insbesondere mindestens eine Giessform, in welche eine Fett- oder Schokolademasse giessbar ist und der mindestens eine Stempel eingeführt werden kann, um die Fett- oder Schokoladenmasse zu einer Hülse zu formen.

Besonders bevorzugt weist die Vorrichtung eine Fördervorrichtung auf, insbesondere ein Förderband, ein Roll- und/oder ein Kettenförderer. Durch die Fördervorrichtung lassen sich kontinuierlich Giessformen an der Stempelplatte vorbeiführen, was die Produktionseffizienz der Vorrichtung steigert. Alternativ ist die Vorrichtung so ausgeführt, dass sich eine Fördervorrichtung ankoppeln lässt.

Das Gehäuse weist vorzugsweise mindestens einen Durchlass auf, durch welchen sich die mindestens eine Giessform, insbesondere durch die Fördervorrichtung in das Gehäuse einbringen lässt. Besonders bevorzugt ist dieser mindestens eine Durchlass derart ausgestaltet, dass ein Austausch der Luft innerhalb des Gehäuses mit der Umgebungsluft ausserhalb des Gehäuses möglichst vermieden wird. Dies kann beispielsweise durch einen möglichst kleinen Durchlass oder durch eine sich nur zum Einbringen einer Giessform öffnenden Klappe erreicht werden. Alternativ kann auch ein Streifenvorhang oder ein Bandtor verwendet werden oder im Innern des Gehäuses ein Überdruck erzeugt werden. Durch das Vermeiden des Luftaustauschs geht nur ein sehr kleiner Teil der Trockenluft verloren, was einen energetisch günstigen Betrieb der Vorrichtung ermöglicht.

Besonders bevorzugt weist die Vorrichtung ein Fördermittel auf, welches Giessformen kontinuierlich durch einen ersten Durchlass in das Gehäuse einführt, an der Stempelplatte vorbeiführt und anschliessend durch einen zweiten Durchlass wieder aus dem Gehäuse hinausführt. Dadurch lässt sich die erfindungsgemässe Vorrichtung in eine Produktionsstrasse für Verzehrgüter einbauen.

Die Vorrichtung verfügt bevorzugt über eine Stempelplatte. Alternativ kann die Vorrichtung auch mehr als eine Stempelplatte umfassen. Dadurch kann die Produktionsgeschwindigkeit erhöht werden. Die Stempelplatten können dabei sowohl in Serie hintereinander wie auch parallel nebeneinander angeordnet sein.

Der mindestens eine Stempel ist temperierbar. Bevorzugt wird dabei eine Kühlflüssigkeit durch einen Kanal im mindestens einen Stempel geleitet. Durch die Kühlflüssigkeit lässt sich der mindestens eine Stempel auf eine bestimmte Temperatur oder einen Temperaturbereich kühlen. Alternativ kann der mindestens eine Stempel auch elektrisch gekühlt werden, z.B. durch ein Pelletier-Element. Dies führt in bekannter Weise zum schnelleren Erstarren der Fett- oder Schokoladenmasse in der Giessform. Besonders bevorzugt weist die wenigstens eine Stempelplatte Anschlussmöglichkeiten auf, um diese an einen Kühlflüssigkeitskreislauf anzuschliessen. Der Kühlflüssigkeitskreislauf ist bevorzugt Bestandteil der Vorrichtung.

Die Vorrichtung verfügt bevorzugt über Mittel, um die Stempelplatte aus einer Arbeitsposition, in welcher der mindestens eine Stempel in wenigstens eine Giessform eingeführt werden kann, zu bewegen, insbesondere zu verschieben. Bevorzugt wird die wenigstens eine Stempelplatte dabei aus dem Gehäuse hinaus bewegt, wie z.B. gehoben oder geschoben. Diese Mittel sind beispielsweise Schienen, Gleitlager oder dergleichen. Alternativ kann die Stempelplatte auch durch eine Schwenkvorrichtung aus dem Gehäuse geschwenkt werden.

Um eine möglichst unterbruchsfreie Kühlung der temperierten Stempel zu gewährleisten, bleibt die Stempelplatte bevorzugterweise auch im herausbewegten Zustand am Kühlflüssigkeitskreislauf angeschlossen. Dies kann durch eine genügend lange und flexible Anbindung an den Kühlkreislauf erfolgen, z.B. mittels eines Schlauchs oder dergleichen. Alternativ kann das Gehäuse auf der Aussenseite über entsprechende Anschlussmöglichkeiten verfügen, die es ermöglichen, die Stempelplatte im herausbewegten Zustand am Kühlflüssigkeitskreislauf anzuschliessen. Dabei müsste die Stempelplatte lediglich während des Herausbewegens kurzzeitig vom Kühlflüssigkeitskreislauf getrennt werden.

Bevorzugt wird der mindestens eine Stempel der wenigstens einen Stempelplatte in der herausbewegten Position über mindestens eine Zuleitung mit getrockneter Luft angeblasen. Dadurch wird verhindert, dass sich am mindestens einen temperierten Stempel Kondenswasser bildet. Besonders bevorzugt ist die Zuleitung derart konfiguriert, dass sich an der wenigstens einen Stempelplatte ein Vorhang aus Trockenluft bildet. Dies kann beispielsweise durch das Anordnen mehrerer Luftdüsen an zwei sich gegenüberliegenden Seiten der Stempelplatte erreicht werden.

Zusätzlich oder alternativ kann ausserhalb des Gehäuses ein Raum vorgesehen sein, in welchen die wenigstens einen Stempelplatte herausbewegbar ist und der mit getrockneter Luft beaufschlagbar ist. Die Trockenluft kann über Düsen direkt an die Stempelplatte herangeführt werden oder der Raum weist mindestens eine Zufuhröffnung auf, über welche eine Trockenlüftung ermöglicht wird, z.B. in Form eines Lüftungsgitters.

Der Raum ist insbesondere zumindest teilweise schliessbar. Das heisst, der Raum wird bevorzugt durch Wände begrenzt, die einen Austausch der Trockenluft mit der Raumluft verhindern und zumindest gering halten. Bevorzugt wird eine Wand des Raumes durch eine Gehäuseaussenwand gebildet.

Der Raum wird bevorzugt durch mindestens eine Wand begrenzt, in welcher insbesondere mindestens ein Lüftungsgitter zum Einleiten von Trockenluft vorgesehen ist.

Der Raum kann von allen Seiten mit Wänden begrenzt werden, wobei mindestens eine Wand durchsichtig ist oder ein Fenster aufweist, so dass die Stempelplatte optisch kontrolliert werden kann.

Der Raum hat bevorzugt eine offene Seite oder eine Wand, die geöffnet werden kann, um den Zugriff auf die Stempelplatte zu ermöglichen.

Der Raum kann als separate Schleuse vorgesehen sein, die unabhängig von dem Gehäuse ausgebildet ist und an das Gehäuse herangebracht wird, wenn die Stempelplatte aus dem Gehäuse geführt werden soll.

Wände des Raumes können klappbar und/oder schiebbar an dem Gehäuse befestigt sein, z. B. in Form von Türelementen, die geöffnet und ausgerichtet werden, bevor die Stempelplatte aus dem Gehäuse geschoben wird.

Insbesondere können eine oder mehrere mit Lüftungsgittern zur Beaufschlagung mit getrockneter Luft derart in oder an dem Gehäuse angeordnet sein, dass der Raum Zur Beaufschlagung mit Trockenluft vor oder mit dem Herausziehen der Stempelplatte aus dem Gehäuse gebildet wird.

Beispielsweise können Wände mit Zuführmitteln für Trockenluft, insbesondere Lüftungsschlitzen, zusammen mit der Stempelplatte aus dem Gehäuse herausziehbar sein.

Dieselben Zuführmitteln für Trockenluft, insbesondere Lüftungsschlitze, können auch während des Stempelbetriebs innerhalb des Gehäuses für die Beaufschlagung der Stempelplatte mit Trockenluft sorgen.

Bevorzugt ist die Stempelplatte an Teleskopschienen angebracht. Dies ermöglicht ein einfaches Herausziehen der Stempelplatte. Da sich die Schienen nach dem Hineinschieben vollständig im Gehäuse befinden, lässt sich die Vorrichtung Platz sparend gestalten. Ferner ist die Stempelplatte besonders bevorzugt mit Exzenterbolzen an den Teleskopschienen befestigt. Dadurch lässt sich die Stempelplatte besonders schnell und einfach lösen, was ein effizientes Auswechseln der Stempelplatte ermöglicht.

Das Gehäuse weist bevorzugt eine verschliessbare Öffnung auf, wobei die Stempelplatte derart ausgebildet und aus der Öffnung herausbewegbar ist, dass die herausbewegte Stempelplatte die Öffnung schliesst. Dadurch kann auch bei herausbewegter Platte der Austausch von Luft aus dem Innenraum des Gehäuses mit der Umgebungsluft ausserhalb des Gehäuses effizient verhindert werden. Die Öffnung ist dabei besonders bevorzugt derart ausgestaltet, dass eine Seite der herausgeschobenen Stempelplatte die Öffnung bündig verschliesst. Alternativ kann ein Verschlusselement z.B. an den Teleskopschienen angebracht sein, welches sich beim Herausziehen der Stempelplatte mitbewegt, um die Öffnung zu verschliessen.

Bevorzugt ist die Stempelplatte in der herausbewegten Position zusätzlich um eine Achse quer zur Richtung des Herausbewegens drehbar. Dies ermöglicht z.B. das Aufrichten oder das Senkrechtstellen der Stempelplatte, was deren Reinigung erheblich erleichtert.

Wichtig ist dabei, dass die vorhandenen Zuführmittel für Trockenluft mit der Stempelplatte mitdrehen, so dass der mindestens eine Stempel auch in einer gedrehten Lage mit Trockenluft angeblasen werden kann.

Alternativ weisen die Stempel der Stempelplatte nach dem Drehen, in einen Raum, der mit Trockenluft beaufschlagbar ist.

Die Vorrichtung weist bevorzugt eine Wartungsvorrichtung auf, die sich ausserhalb des Gehäuses befindet und bevorzugt dem Gehäuse angegliedert ist. In der Wartungsvorrichtung sind eine Aufnahme für die Stempelplatte sowie die Zuleitung für die Trockenluft angeordnet.

Die Trockenluft kann über in der Wartungsvorrichtung angeordnete Düsen direkt an die Stempelplatte geführt werden oder die Wartungsvorrichtung umfasst einen Raum, der, z.B. über Lüftungsgitter, mit Trockenluft beaufschlagbar ist.

Die Wartungsvorrichtung kann z.B. als Nische in einer der Gehäusewandungen ausgestaltet sein. Ferner kann die Wartungsvorrichtung auch über weitere Vorrichtungen verfügen, z.B. Halterungen für Putz- und Wartungswerkzeuge oder dergleichen. Die Aufnahme für die Stempelpatte kann beispielsweise als Fixationselement für Teleskopschienen oder andere Mittel zum Bewegen der Stempelpatte ausgestaltet sein.

Die Wartungsvorrichtung wird durch mindestens eine Wand teilweise oder ganz geschlossen, sodass kein oder nur ein geringer Luftaustausch mit der Umgebungsluft ausserhalb der Wartungsvorrichtung stattfindet. Dies erhöht die Effizienz der Trockenluftzuführung und hilft, die Bildung von Kondenswasser bzw. Eis zu verhindern. Zudem wird der Kontakt der Stempelplatten mit ungefilterter und/oder nicht entkeimter Luft reduziert, was die Hygiene zusätzlich erhöht.

Bevorzugt umfasst die Vorrichtung eine Trockenluftanlage, welche das Gehäuseinnere und die Trockenluftzuleitung der Wartungsvorrichtung mit Trockenluft versorgt. Die Trockenluftanlage kann dabei noch zusätzliche Filter- und/oder Entkeimungselemente sowie wahlweise Kühler oder Erhitzer zur Vorkühlung oder Vorwärmung der Trockenluft aufweisen.

Insbesondere kann Trockenluft, die unterhalb einer Stemplelatte in einen mit Trockenluft beaufschlagten Raum geleitet wird, gegenüber der Luft, welche die Stempel umgibt, erwärmt sei, damit die Trockenluft zu der Stempelplatte hochsteigt.

Alternativ kann die Trockenluft gekühlt sein, um gezielt zur Fortsetzung der Kühlung der Stempel während der Reinigungs- oder Wartungsphase beizutragen.

Ein weiterer Aspekt der vorliegenden Erfindung bezieht sich auf eine Wartungsvorrichtung, welche an einer Vorrichtung zum Herstellen von geformten Verzehrgütern aus einer Fettmasse angebracht oder an diese heranführbar sein kann.

Die erfindungsgemässe Wartungsvorrichtung weist eine Zuleitung für Trockenluft sowie eine Aufnahme für eine Stempelplatte auf.

Die Trockenluft kann über in der Wartungsvorrichtung angeordnete Düsen direkt an die Stempelplatte geführt werden oder die Wartungsvorrichtung umfasst einen Raum, der, z.B. über Lüftungsgitter, mit Trockenluft beaufschlagbar ist.

Der Wartungseinrichtung kann eine eigene Trockenluftanlage aufweisen oder von der Trockenluftanlage versorgt werden, die auch das Innere des Gehäuses mit Trockenluft versorgt.

Die Wartungsvorrichtung ist derart positionierbar, dass sich eine in der Aufnahme befindliche Stempelplatte nicht über einer Giessform oder einer Fördervorrichtung befindet.

Die Stempelplatte ist bevorzugt aus einer Vorrichtung zum Herstellen von geformten Verzehrgütern aus einer Fettmasse bewegbar, insbesondere schiebbar. Alternativ ist die Stempelplatte auch aus der Vorrichtung entfernbar.

Eine Stempelplatte, welche zur Reinigungszwecken, zu Wartungszwecken oder zum Transport an einen anderen Ort in die Wartungsvorrichtung bewegt wird, kann durch Beaufschlagung mit Trockenluft in der Wartungsvorrichtung vor der Bildung von Kondenswasser geschützt werden.

Die Wartungsvorrichtung wird bevorzugterweise durch mindestens eine Wand teilweise oder ganz geschlossen, sodass kein oder nur ein geringer Luftaustausch mit der Umgebungsluft ausserhalb der Wartungsvorrichtung stattfindet. Dies erhöht die Effizienz der Trockenluftzuführung und hilft die Bildung von Kondenswasser zu verhindern. Zudem wird der Kontakt der Stempelplatten mit ungefilterter und/oder nicht entkeimter Luft reduziert, was die Hygiene zusätzlich erhöht. Zudem wird die Menge der benötigten Trockenluft auf ein Minimum reduziert.

Die Wartungsvorrichtung weist bevorzugt zusätzlich einen Anschluss für ein Kühlmittel auf, der an eine Stempelplatte ankoppelbar ist. Dadurch lässt sich eine unterbruchsfreie Kühlung des mindestens einen Stempels auch im herausbewegten Zustand der Stempelplatte erreichen.

Bevorzugt weist die Wartungsvorrichtung zusätzlich einen Rollwagen, insbesondere einen Hubwagen, zur Aufnahme einer Stempelplatte auf. Der Rollwagen verfügt bevorzugt über einen Schutzkasten zum Schutz der Stempel vor Beschädigungen. Durch den Rollwagen lässt sich die verwendete Stempelplatte relativ einfach und effizient auswechseln. Alternativ können zum Auswechseln der Stempelplatte auch andere gängige Flurförderfahrzeuge verwendet werden, wie beispielsweise Gabelstapler.

Eine weitere Aufgabe der vorliegenden Erfindung liegt darin, ein Verfahren bereit zu stellen, bei dem eine Stempelplatte mit mindestens einem temperierten Stempel einfach und effizient gereinigt werde kann und welche die Nachteile der bekannten Reinigungsverfahren umgeht.

In einem ersten Schritt des erfindungsgemässen Verfahrens zum Reinigen mindestens eines temperierten Stempels, der sich auf einer Stempelplatte befindet, in einer Vorrichtung zum Herstellen von geformten Verzehrgütern aus einer Fettmasse, insbesondere einer und/oder schokoladeartigen Fettmasse, wird die Stempelplatte aus dem Gehäuse herausbewegt, insbesondere herausgeschoben. Dies kann beispielsweise über dazu geeignete Mittel, wie Schienen oder Gleitlager, welche in der Vorrichtung angebracht sind, erfolgen.

Nach dem Herausbewegen wird der mindestens eine Stempel gereinigt. Dies kann auf konventionelle Weise durch Abschaben von Fett- oder Schokolademassereste vom mindestens einen Stempel erfolgen. Alternativ könnte die Reinigung auch auf andere Weise erfolgen, z.B. durch Aufsprühen einer Reinigungsflüssigkeit.

Nach dem Reinigen wird die Stempelplatte wieder in das Gehäuse hineinbewegt.

Bevorzugt wird die Stempelplatte vor dem Herausbewegen zunächst von Kühlmitteversorgungsleitungen abgekoppelt. Nach dem Hereinbewegen wird die Stempelplatte entsprechend wieder an die Kühlmitteversorgungsleitungen ankoppelt.

Bevorzugt findet die Reinigung unter Beaufschlagung der Stempelplatte mit Trockenluft statt.

In einem weiteren erfindungsgemässen Verfahren zum Reinigen eines Stempels, der sich auf einer Stempelplatte befindet, in einer Vorrichtung zum Herstellen von geformten Verzehrgütern aus einer Fettmasse, insbesondere einer kakaohaltigen bzw. schokoladeartigen Fettmasse, wird die Stempelplatte zum Reinigen in einer Wartungsvorrichtung, insbesondere gemäss der vorliegenden Erfindung, gebracht. In dieser Wartungsvorrichtung wird die Stempelplatte mit Trockenluft beaufschlagt, insbesondere angeblasen. Dadurch wird die Bildung von Kondenswasser an der Stempelplatte verhindert.

Zur Bereitstellung der Trockenluft in der Wartungsvorrichtung wird bevorzugt Trockenluft aus dem Gehäuse der Vorrichtung abgezweigt oder aus einer Trockenluftzuführung oder -rückführung eines Trockenluftkreislaufs des Gehäuses entnommen.

Eine weitere Aufgabe der vorliegenden Erfindung ist es ein Verfahren zum Austauschen einer Stempelplatte mit mindestens einem temperierbaren Stempel, in einer Vorrichtung, insbesondere gemäss der vorliegenden Erfindung, zum Herstellen von geformten Verzehrgütern aus einer Fettmasse, insbesondere einer kakaohaltigen und/oder schokoladeartigen Fettmasse, mit einem Gehäuse bereit zu stellen.

In einem ersten Schritt des erfindungsgemässen Verfahrens wird eine Austauschstempelplatte in einer Wartungsvorrichtung, insbesondere gemäss der vorliegenden Erfindung, zur Verfügung gestellt. Danach wird eine benutzte Stempelplatte aus dem Gehäuse der Vorrichtung in die Wartungsvorrichtung herausgeschoben. In der Wartungsvorrichtung wird die Austauschstempelplatte mit Trockenluft angeblasen und/oder über Kühlleitungen gekühlt. Im letzen Schritt des Verfahrens wird die Austauschstempelplatte in das Gehäuse geschoben.

Eine oder mehrere Austauschstempelplatten können auch innerhalb des Gehäuses einer Vorrichtung wie oben beschrieben gelagert werden. Zur Inbetriebnahmen muss die Austauschstempelplatte in die Arbeitsposition gebracht werden. Hierzu kann die Vorrichtung über Mittel verfügen, welche ein einfaches Austauschen der Stempelplatten ermöglichen, wie beispielsweise Schienen oder dergleichen.

Innerhalb des Gehäuses erfährt die Austauschstempelplatte Bedingungen, die Beschlagen mit Kondenswasser verhindern.

Die Austauschstempelplatte kann ebenfalls zum Bereitmachen aus dem Gehäuse herausgeschoben werden, wobei diese bevorzugt in der herausgeschobenen Position mit Trockenluft angeblasen wird, insbesondere in einer Wartungsvorrichtung gemäss der vorliegenden Erfindung.

Weitere Details und Ausführungsformen der vorliegenden Erfindung lassen sich aus den folgenden Beispielen und Figuren entnehmen. Es zeigen:
- Fig. 1:: Eine perspektivische Ansicht einer Ausführungsform einer erfindungsgemässen Vorrichtung;
- Fig. 2:: eine perspektivische Ansicht der Vorrichtung aus der Figur 1 mit herausgezogener Stempelplatte; und
- Fig. 3:: eine Ansicht der Stempelplatte im herausgezogenen Zustand von unten.

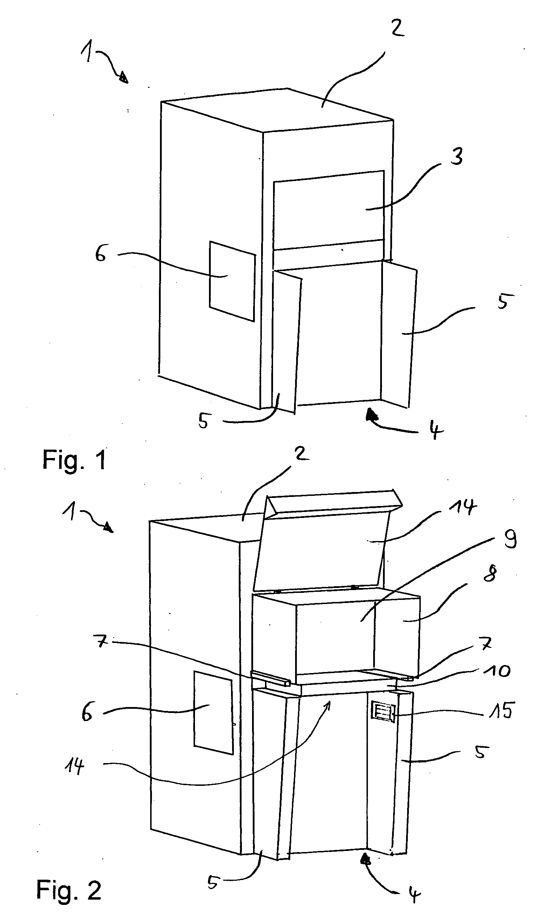

Die Figur 1 stellt eine perspektivische Ansicht einer erfindungsgemässen Vorrichtung 1 dar. Die Vorrichtung 1 umfasst ein Gehäuse 2 mit einer Öffnung 3 sowie einem Durchlass 6. Der Durchlass 6 ist derart konfiguriert, dass Giessformen in das Innere des Gehäuses 2 gelangen können, ohne dass ein wesentlicher Austausch von Luft aus dem Inneren des Gehäuses 2 mit der Umgebungsluft ausserhalb des Gehäuses 2 stattfindet. Beispielsweise kann der Durchlass 6 einen Streifenvorhang oder ein Bandtor aufweisen. Ferner ist unter der Öffnung 3 eine Wartungsvorrichtung 4 angeordnet, welcher durch Wände 5 teilweise verschlossen ist.

Auf der Figur 2 ist eine perspektivische Darstellung des Beispiels für eine Vorrichtung aus der Figur 1 mit herausgezogener Stempelplatte 10 gezeigt. Bei der gezeigten Ausführungsform der Vorrichtung 1 wird die Stempelplatte 10 mithilfe von Teleskopschienen 7 aus dem Gehäuse 2 bewegt. Dazu wird zunächst die Öffnung 3 geöffnet, d.h. bei der gezeigten Ausführungsform wird eine Klappe 14 aufgeklappt. Zum Schutz der Stempelplatte 10 wird bei diesem Beispiel zusätzlich ein Schutzaufbau 8 aus dem Gehäuse 2 mit der Stempelplatte 10 zusammen herausbewegt. Um die Öffnung 3 wieder zu verschliessen wird ein Verschlusselement 9 gleichzeitig mit dem Schutzaufbau 8 verschoben.

Die Wände 5 begrenzen einen Raum 14, der mit Trockenluft beaufschlagbar ist, wenn die Stempelplatte 10 aus dem Gehäuse 2 heraus geschoben ist. Es können weitere, in der Zeichnung nicht explizit dargestellte Wände vorgesehen sein, die einen Luftaustausch mit dem umgebenden Raum verhindern.

In einer Seitenwand 5 ist ein Lüftungsgitter 15 angeordnet, über welches der Raum 14 mit Trockenluft versorgt wird.
In der gegenüberliegenden Seitenwand kann ein nicht explizit dargestelltes weiteres Lüftungsgitter angebracht sein.

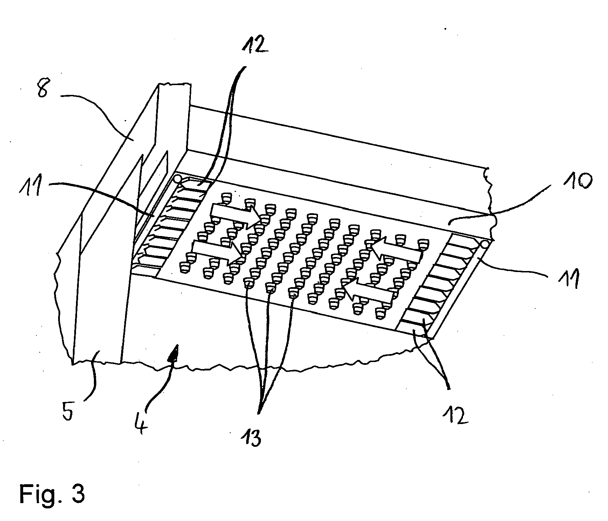

Alternativ und/oder zusätzlich können Lüftungsgitter oder andere, wie zum Beispiel in Figur 3 gezeigte, Zuführmittel 11 an die Stempelplatte gekoppelt sein und mit dieser herausgezogen werden.

Die herausgezogene Stempelplatte 10 und die Wände 5 definieren einen mit Trockenluft beaufschlagbaren Raum 14, der mit der Stempelplatte 10 aus dem Gehäuse heraus führbar ist.

Die Wände können wie im gezeigten Beispiel fest stehen, oder aber zum Beispiel türartig klappbar, einhängbar oder aus dem Gehäuse herausziehbar sein.

Über die Lüftungsgitter wird ein Trockenluftpolster an den Stempeln der herausgezogenen Stempelplatte 10 erzeugt, das die Bildung von Kondenswasser verhindert.

Die Figur 3 zeigt eine perspektivische Ansicht einer Stempelplatte 10 im herausbewegten Zustand. In dem gezeigten Beispiel sind in der Wartungsvorrichtung 4 Zuführmittel 11 angeordnet, welche über Düsen 12 die Stempel 13 der Stempelplatte 10 mit Trockenluft anblasen. Die Düsen 12 sind dabei derart angeordnet, dass die eingeblasene Trockenluft (durch die Pfeile symbolisiert) einen Vorhang an Trockenluft entlang einer Seite der Stempelplatte 10 bildet. Dadurch wird die Bildung von Kondenswasser an den Stempeln 13 verhindert.

## Patentansprüche

1. Vorrichtung (1) zum Herstellen von geformten Verzehrgütern aus einer Fettmasse, insbesondere einer und/oder schokoladeartigen Fettmasse, umfassend ein Gehäuse (2) und wenigstens eine Stempelplatte (10) mit mindestens einem temperierbaren Stempel (13), **dadurch gekennzeichnet, dass** die Stempelplatte (10) aus einer Arbeitsposition, in welcher der mindestens eine temperierbare Stempel (13) in wenigstens eine Giessform eingeführt werden kann, bewegbar, insbesondere schiebbar ist, wobei die Stempelplatte aus dem Gehäuse (2) hinaus bewegbar, insbesondere schiebbar ist.

2. Vorrichtung (1) nach Anspruch 1, **dadurch gekennzeichnet, dass** in der herausbewegten Position der wenigstens einen Stempelplatte (10) der mindestens eine Stempel (13) über mindestens eine Zuleitung (11) mit getrockneter Luft angeblasen wird.

3. Vorrichtung (1) nach Anspruch 1 oder 2, **dadurch gekennzeichnet, dass** ausserhalb des Gehäuses ein, insbesondere zumindest teilweise schliessbarer Raum (14) vorgesehen ist, in welchen die wenigstens einen Stempelplatte (10) herausbewegbar ist und der mit getrockneter Luft beaufschlagbar ist, wobei der Raum durch mindestens eine Wand begrenzt wird, in welcher insbesondere mindestens ein Lüftungsgitter (15) zum Einleiten von Trockenluft vorgesehen ist.

4. Vorrichtung nach einem der Ansprüche 1 bis 3, **dadurch gekennzeichnet, dass** die Stempelplatte (10) an Teleskopschienen (7) angebracht ist, insbesondere mit Exzenterbolzen daran befestigt ist.

5. Vorrichtung (1) nach Anspruch 1 bis 4, **dadurch gekennzeichnet, dass** das Gehäuse (2) eine verschliessbare Öffnung (3) aufweist und die Stempelplatte (10) derart ausgebildet und aus der Öffnung (3) herausbewegbar ist, dass die herausbewegte Stempelplatte (10) die Öffnung (3) verschliesst.

6. Vorrichtung (1) nach einem der Ansprüche 1 bis 5, **dadurch gekennzeichnet, dass** die Stempelplatte (10) in herausbewegter Position um eine Achse quer zur Richtung des Herausbewegens drehbar ist.

7. Vorrichtung (1) nach einem der Ansprüche 1 bis 6, **dadurch gekennzeichnet, dass** die Vorrichtung (1) eine Wartungsvorrichtung (4) aufweist, die sich ausserhalb des Gehäuses (2) befindet und bevorzugt dem Gehäuse (2) angegliedert ist, wobei in dieser Wartungsvorrichtung (4) eine Aufnahme für die Stempelplatte (10) und eine Zuleitung (11) für Trockenluft angeordnet sind.

8. Vorrichtung (1) nach Anspruch 7, **dadurch gekennzeichnet, dass** die Wartungsvorrichtung (4) durch mindestens eine Wand (5) teilweise oder ganz geschlossen ist, sodass kein oder nur ein geringer Luftaustausch mit der Umgebungsluft ausserhalb der Wartungsvorrichtung (4) stattfindet.

9. Vorrichtung (1) nach Anspruch 7 oder 8, **dadurch gekennzeichnet, dass** die Vorrichtung (1) eine Trockenluftanlage umfasst, welche das Gehäuseinnere und die Trockenluftzuleitung (11) der Wartungsvorrichtung (4) mit Trockenluft versorgt.

10. Wartungsvorrichtung (4) für eine Vorrichtung (1) gemäss einem der Ansprüche 1 bis 9, **dadurch gekennzeichnet, dass** die Wartungsvorrichtung (4) eine Zuleitung (11) für Trockenluft sowie eine Aufnahme für die Stempelplatte (10) aufweist und derart positionierbar ist, dass sich eine in der Aufnahme befindliche Stempelplatte (10) nicht über einer Giessform oder einer Fördervorrichtung befindet.

11. Wartungsvorrichtung gemäss Anspruch 10, **dadurch gekennzeichnet, dass** die Wartungsvorrichtung (4) durch mindestens eine Wand (5) teilweise oder ganz geschlossen ist, sodass kein oder nur ein geringer Luftaustausch mit der Umgebungsluft ausserhalb der Wartungsvorrichtung (4) stattfindet.

12. Wartungsvorrichtung gemäss Anspruch 8 oder 11, **dadurch gekennzeichnet, dass** die Wartungsvorrichtung (4) einen Anschluss für ein Kühlmittel aufweist, der an eine Stempelplatte (10) ankoppelbar ist.

13. Wartungsvorrichtung gemäss einem der Ansprüche 8 bis 12, **dadurch gekennzeichnet, dass** die Wartungsvorrichtung (4) zusätzlich einen Rollwagen, insbesondere einen Hubwagen, zur Aufnahme einer Stempelplatte (10) aufweist, bevorzugt mit einem Schutzkasten zum Schutz der Stempel (13) vor Beschädigungen.

14. Verfahren zum Reinigen mindestens eines temperierten Stempels (13), der sich auf einer Stempelplatte (10) befindet, in einer Vorrichtung (1) gemäss einem der Ansprüche 1 bis 8, **dadurch gekennzeichnet, dass**
die Stempelplatte (10) aus einer Arbeitsposition, in welcher der mindestens eine temperierbare Stempel (13) in wenigstens eine Giessform eingeführt werden kann, bewegt wird, insbesondere geschoben wird, wobei die Stempelplatte aus dem Gehäuse (2) herausbewegt, insbesondere herausgeschoben, wird;
der mindestens eine Stempel (13) gereinigt wird; und
- die Stempelplatte (10) in das Gehäuse (2) hereinbewegt wird.

15. Verfahren nach Anspruch 14, **dadurch gekennzeichnet, dass** das Reinigen unter Beaufschlagung der Stempelplatte (10) mit Trockenluft und/oder in einem mit Trockenluft beaufschlagten Raum (14) stattfindet.

16. Verfahren nach Anspruch 14 oder 15, **dadurch gekennzeichnet, dass** vor dem Herausbewegen der Stempelplatte (10) aus dem Gehäuse (2) die Stempelplatte (10) von Kühlmitteversorgungsleitungen abgekoppelt wird und nach dem Hereinbewegen der Stempelplatte (10) in das Gehäuse (2) die Stempelplatte wieder an die Kühlmittelversorgungsleitungen angekoppelt wird.

17. Verfahren nach Anspruch 14, **dadurch gekennzeichnet, dass**
- eine Stempelplatte (10) zum Reinigen in eine Wartungsvorrichtung (4) gemäss Anspruch 10-12, gebracht wird; und
- mit Trockenluft angeblasen wird.

18. Verfahren nach Anspruch 17, **dadurch gekennzeichnet, dass** zur Bereitstellung der Trockenluft in der Wartungsvorrichtung Trockenluft aus dem Gehäuse (2) der Vorrichtung (1) abgezweigt wird oder einer Trockenluftzuführung oder -rückführung eines Trockenluftkreislauf des Gehäuses (2) entnommen wird.

19. Verfahren zum Austauschen einer Stempelplatte (10) mit mindestens einem temperierbaren Stempel (13), in einer Vorrichtung gemäss einem der Ansprüche 1 bis 9, **dadurch gekennzeichnet, dass** in einer Wartungsvorrichtung (4) gemäss den Ansprüchen 10-12, eine Austauschstempelplatte zur Verfügung gestellt wird,
- eine benutzte Stempelplatte aus dem Gehäuse (2) in eine Wartungsvorrichtung gemäss Anspruch 10-12, herausbewegt, insbesondere herausgeschoben, wird,
- die Austauschstempelplatte in das Gehäuse (2) geschoben wird, wobei die Austauschplatte in der Wartungsvorrichtung (4) mit Trockenluft angeblasen wird und/oder über Kühlleitungen gekühlt wird, bevor sie in das Gehäuse (2) bewegt, insbesondere geschoben wird.

## Claims

1. Apparatus (1) for producing shaped consumable items from a fatty substance, in particular a cocoa-containing and/or chocolate-like fatty substance, comprising a housing (2) and at least one stamping plate (10) having at least one temperature-controllable stamp (13), **characterized in that** the stamping plate (10) can be moved, in particular can be slid, from a working position, in which the at least one temperature-controllable stamp (13) can be introduced into at least one pouring mold, wherein the stamping plate can preferably be moved, in particular can be slid, out of the housing (2).

2. Apparatus (1) according to Claim 1, **characterized in that**, when the at least one stamping plate (10) is in the moved-out position, dried air is blown at the at least one stamp (13) by way of at least one feed line (11).

3. Apparatus (1) according to Claim 1 or 2, **characterized in that** an in particular at least partially closable space (14) is provided outside the housing, into which space the at least one stamping plate (10) can be moved out and which space can be subjected to dried air, wherein the space is delimited by at least one wall in which, in particular, at least one ventilation grille (15) is provided for feeding in drying air.

4. Apparatus according to one of Claims 1 to 3, **characterized in that** the stamping plate (10) is fitted to telescopic rails (7), in particular is fastened thereto by eccentric bolts.

5. Apparatus (1) according to Claims 1 to 4, **characterized in that** the housing (2) has a closable opening (3), and the stamping plate (10) is formed and can be moved out of the opening (3) in such a manner that the stamping plate (10) which has been moved out closes the opening (3).

6. Apparatus (1) according to one of Claims 1 to 5, **characterized in that**, in the moved-out position, the stamping plate (10) is rotatable about an axis transverse to the direction in which it is moved out.

7. Apparatus (1) according to one of Claims 1 to 6, **characterized in that** the apparatus (1) has a maintenance apparatus (4), which is located outside the housing (2) and is preferably attached to the housing (2), wherein a receptacle for the stamping plate (10) and a feed line (11) for drying air are arranged in said maintenance apparatus (4).

8. Apparatus (1) according to Claim 7, **characterized in that** the maintenance apparatus (4) is closed partially or entirely by at least one wall (5), so that no or only a small air exchange takes place with the ambient air outside the maintenance apparatus (4).

9. Apparatus (1) according to Claim 7 or 8, **characterized in that** the apparatus (1) comprises a drying air system, which supplies the housing interior and the drying air feed line (11) of the maintenance apparatus (4) with drying air.

10. Maintenance apparatus (4) for an apparatus (1) according to one of Claims 1 to 9, **characterized in that** the maintenance apparatus (4) has a feed line (11) for drying air and also a receptacle for the stamping plate (10), and can be positioned in such a manner that a stamping plate (10) located in the receptacle is not located above a pouring mold or a conveying apparatus.

11. Maintenance apparatus according to Claim 10, **characterized in that** the maintenance apparatus (4) is closed partially or entirely by at least one wall (5), so that no or only a small air exchange takes place with the ambient air outside the maintenance apparatus (4).

12. Maintenance apparatus according to Claim 8 or 11, **characterized in that** the maintenance apparatus (4) has a connection for a coolant, which can be coupled to a stamping plate (10).

13. Maintenance apparatus according to one of Claims 8 to 12, **characterized in that** the maintenance apparatus (4) additionally has a rolling cart, in particular a lifting cart, for receiving a stamping plate (10), preferably with a protective box for protecting the stamps (13) against damage.

14. Method for cleaning at least one temperature-controlled stamp (13), which is located on a stamping plate (10), in an apparatus (1) according to one of Claims 1 to 8, **characterized in that** the stamping plate (10) is moved, in particular is slid, from a working position, in which the at least one temperature-controllable stamp (13) can be introduced into at least one pouring mold, wherein the stamping plate is moved out, in particular is slid out, of the housing (2);
the at least one stamp (13) is cleaned; and
- the stamping plate (10) is moved into the housing (2).

15. Method according to Claim 14, **characterized in that** the cleaning takes place with the stamping plate (10) being subjected to drying air and/or in a space (14) subjected to drying air.

16. Method according to Claim 14 or 15, **characterized in that**, before the stamping plate (10) is moved out of the housing (2), the stamping plate (10) is uncoupled from coolant supply lines, and, after the stamping plate (10) has been moved into the housing (2), the stamping plate is recoupled to the coolant supply lines.

17. Method according to Claim 14, **characterized in that**
- a stamping plate (10) is brought into a maintenance apparatus (4) according to Claims 10-12 for cleaning; and
- drying air is blown at it.

18. Method according to Claim 17, **characterized in that**, to provide the drying air in the maintenance apparatus, drying air is branched off from the housing (2) of the apparatus (1) or is taken from a drying air supply line or return line of a drying air circuit of the housing (2).

19. Method for replacing a stamping plate (10) having at least one temperature-controllable stamp (13), in an apparatus according to one of Claims 1 to 9, **characterized in that** a replacement stamping plate is made available in a maintenance apparatus (4) according to Claims 10-12,
- a used stamping plate is moved out, in particular is slid out, of the housing (2) in a maintenance apparatus according to Claims 10-12,
- the replacement stamping plate is slid into the housing (2), wherein drying air is blown at the replacement plate in the maintenance apparatus (4) and/or the replacement plate is cooled by way of cooling lines, before it is moved, in particular slid, into the housing (2).

## Revendications

1. Dispositif (1) pour fabriquer des produits comestibles moulés à partir d'une masse de graisse, en particulier d'une masse de graisse contenant du cacao et/ou de type chocolat, comprenant une enceinte (2) et au moins une plaque de matrice (10) avec au moins une matrice thermorégulable (13), **caractérisé en ce que** la plaque de matrice (10) peut être déplacée, en particulier glissée, à partir d'une position de travail, dans laquelle ladite au moins une matrice thermorégulable (13) peut être introduite dans au moins un moule de coulée, dans lequel la plaque de matrice peut être déplacée, en particulier glissée, hors de l'enceinte (2).

2. Dispositif (1) selon la revendication 1, **caractérisé en ce que**, dans la position sortie de ladite au moins une plaque de matrice (10), ladite au moins une matrice (13) est soufflée avec de l'air sec par au moins une conduite d'arrivée (11).

3. Dispositif (1) selon la revendication 1 ou 2, **caractérisé en ce qu'**il est prévu à l'extérieur de l'enceinte un espace (14), pouvant être au moins en partie fermé, dans lequel ladite au moins une plaque de matrice (10) peut être sortie et qui peut être exposé à de l'air sec, dans lequel l'espace est limité par au moins une paroi, dans laquelle il est prévu en particulier au moins une grille d'aération (15) pour l'introduction d'air sec.

4. Dispositif selon l'une quelconque .des revendications 1 à 3, **caractérisé en ce que** la plaque de matrice (10) est placée sur des rails télescopiques (7), et en particulier fixée à ceux-ci avec des boulons d'excentrique.

5. Dispositif (1) selon une revendication 1 à 4, **caractérisé en ce que** l'enceinte (2) présente une ouverture pouvant être fermée (3) et la plaque de matrice (10) est configurée et peut être sortie de l'ouverture (3) de telle manière que la plaque de matrice (10) sortie ferme l'ouverture (3).

6. Dispositif (1) selon l'une quelconque des revendications 1 à 5, **caractérisé en ce que** la plaque de matrice (10) en position sortie peut tourner autour d'un axe transversal à la direction de sortie.

7. Dispositif (1) selon l'une quelconque des revendications 1 à 6, **caractérisé en ce que** le dispositif (1) présente un dispositif d'entretien (4), qui se trouve à l'extérieur de l'enceinte (2) et qui est de préférence accolé à l'enceinte (2), dans lequel un logement pour la plaque de matrice (10) et une conduite d'arrivée (11) pour de l'air sec sont disposés dans ce dispositif d'entretien (4).

8. Dispositif (1) selon la revendication 7, **caractérisé en ce que** le dispositif d'entretien (4) est fermé entièrement ou partiellement par au moins une paroi (5), de telle manière qu'il ne se produise pas ou seulement peu d'échange d'air avec l'air ambiant à l'extérieur du dispositif d'entretien (4).

9. Dispositif (1) selon la revendication 7 ou 8, **caractérisé en ce que** le dispositif (1) comprend une installation d'air sec, qui alimente l'intérieur de l'enceinte et la conduite d'arrivée d'air sec (11) du dispositif d'entretien (4) avec de l'air sec.

10. Dispositif d'entretien (4) pour un dispositif (1) selon l'une quelconque des revendications 1 à 9, **caractérisé en ce que** le dispositif d'entretien (4) présente une conduite d'arrivée (11) pour de l'air sec ainsi qu'un logement pour la plaque de matrice (10), et peut être positionné de telle manière qu'une plaque de matrice (10) se trouvant dans le logement ne se trouve pas au-dessus d'un moule de coulée ou d'un dispositif de transport.

11. Dispositif d'entretien selon la revendication 10, **caractérisé en ce que** le dispositif d'entretien (4) est fermé partiellement ou entièrement par au moins une paroi (5), de telle manière qu'il ne se produise pas ou seulement peu d'échange d'air avec l'air ambiant à l'extérieur du dispositif d'entretien (4).

12. Dispositif d'entretien selon la revendication 8 ou 11, **caractérisé en ce que** le dispositif d'entretien (4) présente un raccord pour un agent de refroidissement, qui peut être couplé à une plaque de matrice (10).

13. Dispositif d'entretien selon l'une quelconque des revendications 8 à 12, **caractérisé en ce que** le dispositif d'entretien (4) présente en plus un chariot roulant, en particulier un chariot élévateur, destiné à recevoir une plaque de matrice (10), de préférence avec un caisson de protection pour la protection de la matrice (13) contre les dommages.

14. Procédé de nettoyage d'au moins une matrice thermorégulée (13), qui se trouve sur une plaque de matrice (10), dans un dispositif (1) selon l'une quelconque des revendications 1 à 8,
**caractérisé en ce que**
l'on déplace, en particulier on glisse, la plaque de matrice (10) à partir d'une position de travail, dans laquelle ladite au moins une matrice thermorégulée (13) peut être introduite dans au moins un moule de coulée, dans lequel on déplace, en particulier on glisse, la plaque de matrice hors de l'enceinte (2);
on nettoie ladite au moins une matrice (13); et
- on introduit la plaque de matrice (10) dans l'enceinte (2).

15. Procédé selon la revendication 14, **caractérisé en ce que** l'on effectue le nettoyage avec exposition de la plaque de matrice (10) à de l'air sec et/ou dans un espace (14) exposé à de l'air sec.

16. Procédé selon la revendication 14 ou 15, **caractérisé en ce que**, avant la sortie de la plaque de matrice (10) hors de l'enceinte (2), on déconnecte la plaque de matrice (10) de conduites d'alimentation en agent de refroidissement et, après l'introduction de la plaque de matrice (10) dans l'enceinte (2), on connecte de nouveau la plaque de matrice aux conduites d'alimentation en agent de refroidissement.

17. Procédé selon la revendication 14, **caractérisé en ce que**
- on place une plaque de matrice (10) pour le nettoyage dans un dispositif d'entretien (4) selon une revendication 10 à 12; et
- on la souffle avec de l'air sec.

18. Procédé selon la revendication 17, **caractérisé en ce que**, pour la fourniture de l'air sec dans le dispositif d'entretien, on dévie de l'air sec hors de l'enceinte (2) du dispositif (1) ou on le prélève dans une arrivée ou un retour d'air sec d'un circuit d'air sec de l'enceinte (2).

19. Procédé pour échanger une plaque de matrice (10) avec au moins une matrice thermorégulable (13), dans un dispositif selon l'une quelconque des revendications 1 à 9, **caractérisé en ce que** l'on met à disposition une plaque de matrice de remplacement dans un dispositif d'entretien (4) selon les revendications 10 à 12,
- on retire, en particulier on glisse, une plaque de matrice usée hors de l'enceinte (2) dans un dispositif d'entretien (4) selon une revendication 10 à 12,
- on glisse la plaque de matrice de remplacement dans l'enceinte (2), dans lequel on souffle la plaque de matrice de remplacement dans le dispositif d'entretien (4) avec de l'air sec et/ou on la refroidit au moyen de conduites de refroidissement, avant qu'elle soit déplacée, en particulier glissée, dans l'enceinte (2).
